# EUROPEAN PATENT APPLICATION

(11) **EP 3 959 994 A1**
(43) Date of publication of application: **02.03.2022**
(21) Application number: 20193574.9
(22) Date of filing: 31.08.2020
(51) Int. Cl.: A23L 5/43, A23L 33/105, C09B 61/00

(54) **COLOR FOR PLANT BASED MEAT ALTERNATIVES**

(71) Applicant: Chr. Hansen Natural Colors A/S, 2970 Hørsholm (DK)
(72) Inventor: Frecker, Susan, Milwaukee, WI Wisconsin 53214 (US); Jerominski, Adina, Milwaukee, WI Wisconsin 53214 (US); Kraszewski, AnnMarie, Milwaukee, WI Wisconsin 53214 (US)
(74) Representative: Willnegger, Eva

(57) **Abstract**

A plant-based meat alternative is provided which comprises a colorant composition. The colorant composition comprises an anthocyanin colorant derived from red sweet potato. Before being cooked, the plant-based meat alternative has a red shade similar to uncooked meat, and - after being cooked - it has a brown shade similar to cooked meat.

## Description

### FIELD OF THE INVENTION

The present invention relates to the technical field of natural colorants, especially food colorants, which can be obtained from plant extracts. In particular it relates to a plant-based meat alternative based on a colorant composition comprising color obtained from red sweet potato.

### BACKGROUND OF THE INVENTION

Anthocyanins are well known as a group of compounds giving color to food, vegetables and flowers and are responsible for the blue, purple, violet, magenta, red and orange color of many plant species. Anthocyanins are water soluble, non-toxic pigments and therefore anthocyanins extracted from fruit and vegetables have been used as food colorants for providing colors in the orange to purple color range.

Despite the known utility of natural food colorants including anthocyanin based colorant compositions, there exists a desire to develop a greater diversity of color tones suitable for commercial colorants. A red color tone is especially desirable for coloring foods such as plant-based meat alternatives.

However, depending on the origin of the natural colorant, a colorant sometimes can have a strong taste and/or odor in itself, which would render it unsuitable as a colorant for certain (food) products. This is the case for colorant produced from red radish or red cabbage. For example, odor which originates from red radish can build up inside food packaging and release unpleasant odors when the packaging is opened.

Plant-based meat alternatives have become popular alternatives to meats such as beef, pork, lamb or chicken. Efforts are therefore made to reproduce the feel, texture, taste and color (including color change upon cooking) of such products. Current plant-based meat alternative products are the "Beyond burger" as described in WO2017/070303.

Any red color tones should stable in the range of pH at which plant-based meat alternatives exist. If used in a plant-based meat alternative, a red color tone should provide a color change upon cooking, which is similar to that of meat, in particular beef, such as minced beef.

The present technology aims to address at least some of the above problems. There remains a need for colorants with the right color and which does not introduce a strong taste and/or odor to the product added to. Additionally, there remains a need for colorants suitable for use in plant-based meat alternatives which closely mimic those of meat products, especially before, during and after the cooking process.

### SUMMARY OF THE INVENTION

It has surprisingly been found that colorants derived from red sweet potato can provide a strong red color which is pH stable, which mimics the shade of raw beef and which provides a color change to brown or red-brown upon cooking. No strong taste and/or odor is provided to the food product. This is of high value in for example plant based meat alternatives and dairy analogues.

A plant-based meat alternative is thus provided which comprises a colorant composition, said colorant composition comprising an anthocyanin colorant derived from red sweet potato, wherein said anthocyanin colorant comprises 50-90 mol% of one or more pelargonidin-based anthocyanins.

Further embodiments and aspects of the invention are apparent from the following description and the dependent claims.

### BRIEF DESCRIPTION OF THE FIGURES

Figure 1 shows Colorimetric Data for Anthocyanins in Whole Milk at pH 4, 5, 6 & 7
   - Figure 1A shows DE (Delta E00)
   - Figure 1B shows Hue (Delta H')
   - Figure 1C shows Chroma (Delta C')
   - Figure 1D shows L (Delta L')
   - Figure 1E shows a* value
Figure 2 shows Colorimetric Data for the Uncooked Pea Protein Patty - pH 5 compared to pH 6 & 7
   - Figure 2A shows DE (Delta E00)
   - Figure 2B shows Hue (Delta H')
   - Figure 2C shows Chroma (Delta C')
   - Figure 2D shows L (Delta L')
Figure 3 shows Colorimetric Data for the Baked Pea Protein Patty
   - Figure 3A shows DE (Delta E00)
   - Figure 3B shows Hue (Delta H')
   - Figure 3C shows Chroma (Delta C')
   - Figure 3D shows L (Delta L')
Figure 4 shows Colorimetric Data of the Boiled Pea Protein Patty
   - Figure 4A shows DE (Delta E00)
   - Figure 4B shows Hue (Delta H')
   - Figure 4C shows Chroma (Delta C')
   - Figure 4D shows L (Delta L')
Figure 5 Absolute a* values of uncooked pea protein meat analogue colored naturally from vegetable sources at 3 pH levels (5 - 7)
   - Figure 5A shows uncooked pea protein analogue, pH 5-7
   - Figure 5B shows baked pea protein analogue, pH 5-7
   - Figure 5C shows baked pea protein analogue, pH 5-7
Figure 6 Spider graphs of colorimetric data (L*, a*, b*, Chroma, hue) of uncooked and cooked beef versus plant protein meat analogues colored naturally with single or multiple pigments
   - Figure 6A shows uncooked beef and plant protein analogues
   - Figure 6B shows cooked beef and plant protein analogues

### DETAILED DESCRIPTION OF THE INVENTION

A "plant-based meat alternative" is a product which is typically eaten instead of meat. Plant-based meat alternatives do not comprise any component which derives from meat. As such, plant-based meat alternatives are suitable for people who follow certain diets, such as vegetarians and vegans. The term "plant-based meat alternative" includes meat alternatives that are derived from pulses, grains, yeasts and/or fungus.

Plant-based meat alternatives are typically based on vegetable protein, in particular legume protein such as pea or soy protein.

Plant-based meat alternatives may also comprise flavors, flavor enhancers, minerals, vitamins, lipids, and carbohydrates, all of which should also be plant-based. In particular aspects, the plant-based meat alternative may be constituted by two or more phases, where each phase is designed to mimic a part of a meat product, e.g. a fatty portion.

It has been discovered that sweet potato provides a pH stable, non-GMO, plant-based red that mimics the shade of raw beef in plant-based meat and dairy analogues without a strong taste and/or odor. Liquid and powdered colors derived from sweet potato are produced using traditional food processing methods. These colors are considered plant-based food ingredients with coloring properties.

A plant-based meat alternative is thus provided, comprising a colorant composition. The colorant composition comprising an anthocyanin colorant derived from red sweet potato, wherein said anthocyanin colorant comprises 50-90 mol% of one or more pelargonidin- based anthocyanins.

The plant-based meat alternative may comprise 10-40 weight % vegetable protein, preferably a legume protein, such as e.g. pea protein or soy protein. Other components of the plant-based meat alternative include fats, emulsifiers, flavorings, vitamins and minerals, starch and other carbohydrates such as sugars.

Preferably, the plant-based meat alternative is to be cooked before being eaten. The color change from red to brown is most relevant in such products.

The plant-based meat alternative is - in one embodiment - selected from the group consisting of a plant-based burger patty, a plant-based sausage, plant-based minced beef alternative, plant-based ham alternative, plant-based bacon alternative, plant-based lamb meat alternative and plant-based seafood alternative. Preferably, the plant-based meat alternative is a plant-based burger patty.

The plant-based meat alternative typically comprises the colorant composition in an amount of 0.1 - 10%, preferably 0.5 - 5%, more preferably 1-3% by weight of the plant-based meat alternative. Such amounts are sufficient to provide an acceptable color and color shift during cooking. Additionally, it is noted that the content of certain other colorants in foodstuffs is often limited. E.g. carminic acid is limited by food regulations, making it difficult to incorporate sufficiently high concentrations needed for a strong color shade. Avoidance of carmine as a pigment in a meat analogue is also related to its non- vegan, non-vegetarian, non-kosher status and its potential role in allergic and/or hypersensitivity reactions .

In one aspect, the uncooked plant-based meat alternative has a red shade similar to uncooked ground beef. The range of a* (as defined herein) for the uncooked plant-based meat alternative is thus between 6 and 30, preferably between 7 and 25, more preferably between 7 and 20. The hue range (as defined herein) for the uncooked plant-based meat alternative is thus between 20 and 60, preferably between 22 and 50.

In another aspect, the cooked plant-based meat alternative in has a red-brown shade similar to cooked ground beef. The range of a* (as defined herein) for the cooked plant-based meat alternative is thus between 3 and 20, preferably between 5 and 25, more preferably between 5 and 15.

### Anthocyanin colorant

The colorant composition typically comprises the anthocyanin colorant in an amount of 10-60%, preferably 20-50%, more preferably 25-35% by weight of said colorant composition.

The anthocyanin colorant is derived from red sweet potato. Red sweet potato belongs to the morning glory family, Convolvulaceae, and is not to be compared/mixed up with ordinary potatoes belonging to the family of nightshade, Solanaceae.

The anthocyanin colorant preferably comprises 50-90 mol% of one or more pelargonidin-based anthocyanins. The mol% is based on the total amount of anthocyanins in the anthocyanin colorant.

Suitably,
(i) > 70 mol-% of all pelargonidin-based anthocyanins are acylated with at least one organic acid or at least one phenolic acid; and/or
(ii) > 20 mol-% of all pelargonidin-based anthocyanins are acylated with at least one hydroxycinnamic acid.

The anthocyanin colorant has a red color with a hue value H in the L*C*h* color system in the range of 10-30, measured at an L*-value of (70.0 ± 0.1) in a 0.1 mol/l trisodium citrate dihydrate buffer at pH 3 in a 1 cm-length quartz cell using Spectraflash 650 (Datacolor) in transmission mode under D65 illuminant 10 Deg.

Red shades can be described as being yellow or blue. The red sweet potato is a more true red at the more neutral pH levels whereas other anthocyanins shift blue. A more positive b-value is more yellow and a more negative b-value is more blue.

In one aspect, at least 80 mol-% of all pelargonidin-based anthocyanins in the anthocyanin colorant are acylated. Typically, at least one sugar residue of the pelargonidin-based anthocyanin is acylated with at least one carboxylic acid residue. Preferably, in the above (i) > 70 mol-% of all pelargonidin-based anthocyanins are acylated with at least one phenolic acid.

Red-orange color tones can also be obtained using other colorants, such as carminic acid or red radish extracts. However, carminic acid is obtained from an animal source (bugs) and thus is not suitable for vegetarian and vegan consumers.

Natural anthocyanins in fruit, vegetables and flowers are not present in their aglycone form, but rather are present in form of anthocyanins glycosides. Therein, sugar molecules are bound via an O-glycosidic bond to a hydroxy group, usually present in the 3- and/or 5-position of the anthocyanin molecule. Most commonly, a glycosylation is present on the 3-position and, if present, a second glycosylation is present on the 5-position. However, also a hydroxy group present at position 7, 3', 4' or 5' can be subject to glycosilation. Examples of sugars commonly found in anthocyanin glycosides are glucose, galactose, arabinose, rhamnose and xylose. They can be present as single sugar molecules or in form of di- or tri-saccharides. A glycoside structure can be present in only the 3- or the 5-position of the anthocyanin molecule (monoglycoside) or can be present in both the 3- and the 5-positions thereof (diglycoside). As said above, glycosylations may also be present at other positions.

In one aspect, therefore, the pelargonidin-based anthocyanin is a monoglycoside or polyglycoside of pelargonidin with the chemical structure: 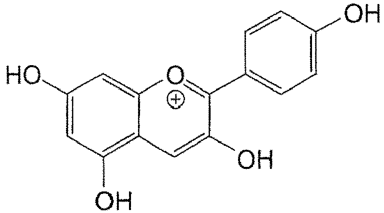 in which one or more alcohol (-OH) groups are glycosylated with a sugar residue selected from glucose, galactose, arabinose, rhamnose and xylose, or di- or tri-saccharides thereof.

Further to the substitution by sugar molecules natural anthocyanins can be acylated within the sugar residue structures. Thus, an acylated anthocyanin is an anthocyanin where the hydroxyl group of a sugar residue is substituted by a carboxylic acid under formation of an ester structure, wherein the carboxylic acid is esterified with a sugar moiety. Carboxylic acids suitable for acylation of anthocyanins and frequently found in natural anthocyanins are the hydroxycinnamic acids, (such as coumaric acid, caffeic acid and ferulic acid) and malic acid (see also below) .

Phenolic acids are suitable for acylation of anthocyanins. Phenolic acids are carboxylic acids having a phenol ring and a carboxylic acid group and include the groups of the benzoic acids and the already mentioned hydroxycinnamic acids.

In more detail, among the benzoic acid derivatives especially suitable are the so-called hydroxybenzoic acids of the following formula 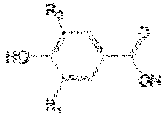 wherein R and R2 are each individually H, OH or OCH3, such as p-hydroxybenzoic acid (R1 = R2= H) protocathechuic acid (R1 = OH, R2 = H), vanillic acid (R1 = OCH3, R2 = H), gallic acid (R1 = R2 = OH) and syringic aicd (R1 = R2 = OCH3) .

Hydroxycinnamic acids generally are understood as a group of compounds of the formula 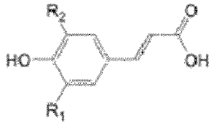 wherein R1 and R2 are each individually H, OH or OCH3, such as p-coumaric acid (R1 = R2 = H), caffeic acid (R1 = OH, R2 = H), ferulic acid (R1 = OCH₃, R2 = H) and sinapic acid (R1 = R2 = OCH3) .

The addition of anthocyanins and colors from vegetable sources, typically contribute acid which lowers the pH of the food product to which it is added. The higher the dosage; the greater the acid (pH lowering) contribution. As the hue contributed by anthocynins becomes redder as the pH drops, it my be of interest to note that a more concentrated anthocyanin blend, with a lower dosage requirement to achieve the same shade, may not lower the pH as much as its weaker counterpart.

Thus, the presently required degree of acylation (i .e. the amount of acylated anthocyanins) of at least 70 mol-% of all anthocyanins present in the composition of the invention provides for a sufficient stability of the claimed colorants. Preferably, at least 70 mol-% of all anthocyanins are acylated with at least one phenolic acid. Also preferably, the amount of acylated anthocyanins is at least 80 mol-%, more preferably at least 85 mol-%, even more preferably at least 90 mol-% based on all anthocyanins present in the composition.

As the present inventors have found out, for the provision of highly stable and bright red-orange anthocyanin composition the acylation with hydroxycinnamic acids is especially preferred, i.e. the acylation with hydroxycinnamic acids renders the anthocyanins especially stable against the influences of light, heat and chemical degradation in a food environment. Thus, the degree of acylation by hydroxycinnamic acids in the present compositions is at least 20 mol-%. Although the degree of acylation by hydroxycinnamic acids with respect to stability can be up to 100%, for practical reasons it is preferably 20-80 mol-%, more preferably 25-75 mol-% or even 30-70 mol-% and 35-70 mol-% being especially preferred.

The anthocyanin colorant comprises pelargonidin-based anthocyanins as the major anthocyanin component. More precisely, the amount of pelargonidin-based anthocyanins, based on all anthocyanins present in the anthocyanin colorant is 50-90 mol-%. Preferably, the amount of pelargonidin-based anthocyanins is 55-85 mol-%, more preferred 60-80 mol-%.

The remainder of other (non-pelargonidin-based) anthocyanin colorants present in the anthocyanin colorant can be any anthocyanin(s) as long as the total amount of anthocyanins shows the amount of acylated anthocyanins and the content of hydroxycinnamic acid acylation moieties defined above, and further shows a red-orange color hue within the range of 10-30, preferably 15-25, measured as defined above.

The other anthocyanins usually represent minor and trace components of anthocyanin extracts obtained from suitable plant stock materials. These other anthocyanins are in general neither necessary nor desired, and can be removed by techniques well known to the person skilled in the art (e.g. by continuous or non-continuous chromatographic processes) However, if desired, other anthocyanins can be intentionally added to a pelargonidin-based anthocyanin composition.

Also, the present invention encompasses embodiments wherein the anthocyanin colorant consists of pelargonidin-based anthocyanins.

Also, other (non-anthocyanin) coloring components may be present in the composition of the invention, as long as the color requirements defined herein are met. These can be coloring substances co-existing with anthocyanins in the plant juices or extracts used for preparing the present composition or can be intentionally added colorants of plant or other, preferably natural, origin. However, also these other coloring components are in principle neither necessary nor desired, and thus preferably are kept at low levels.

In another preferred embodiment the present composition contains no non-anthocyanin coloring compounds, i.e. compositions wherein the coloring components consist of anthocyanin compounds are also preferred.

Kuromanin is cyanidin-3-glucoside and is used as a standard for the determination of anthocyanin contents. To this end, a HPLC calibration curve of this compound is made to correlate the HPLC peak area to the kuromanin concentration (in mg/ml).

Subsequently, a sample to be investigated is injected in HPLC to obtain a chromatogram, and the peaks areas of the anthocyanin peaks area are integrated and converted into concentrations (in mg/ml) using the kuromanin calibration curve. Thus the concentrations of anthocyanin compounds in the sample are expressed as mg/ml of kuromanin equivalent.

Preferably, the amount of anthocyanin in the anthocyanin colorant (kuromanin equivalents), is 2-40 mg/mL, preferably 2-30 mg/ml, more preferably 5-25 mg/ml and especially preferred 8-21 mg/ml or 10-18 mg/ml, for a colorant at 40-60% of dry matter.

The dry matter content of a sample can be determined by weighing accurately 1-2 g of the sample in liquid or powdered form and putting it into a dry porcelain cupel, storing the cupel in a dry oven at 110°C for 2 h (powders) or 3 h (liquids), cooling the sample in a desiccator and weighing it again, The dry matter content (wt.-%) is 100 x (sample weight after drying / sample weight weighed into the cupel).

Also, in cases where a plant extract contains the anthocyanins, acylated anthocyanins and/or anthocyanins acylated by hydroxycinnamic acid in insufficient amounts, the respective ranges of the invention as defined above could be achieved by selectively removing undesirable anthocyanin components. This can be achieved by commonly known techniques, such as chromatographic methods as well known to the skilled person in the present technical field. Additionally or alternatively, the missing (depleted) compounds can be added in the amounts needed.

It is to be noted that the sugars for forming anthocyanin glycosides as well as the carboxylic acids forming acylated anthocyanins as mentioned above represent examples and preferred examples only, while the present invention is not restricted to these sugars and/or carboxylic acids.

### Second colorant

Particularly good results are achieved when mixing the color of red sweet potato with colors from annatto, black carrot and/or paprika. In one embodiment, therefore, the colorant composition further comprises a second colorant derived from black carrot, annatto or paprika, preferably black carrot. Suitably, the colorant composition comprises two second colorants, e.g. black carrot and paprika, or black carrot and annatto.

The plant-based meat alternative suitably comprises the second colorant in an amount of 0.01 - 1% by weight, preferably in an amount of 0.02 - 0.8%, more preferably in an amount of 0.05 - 0.5%, even more preferably in an amount of 0.1 - 0.4 % by weight of the colorant composition.

The combination of the color from red sweet potato with the colors from black carrot, annatto and/or paprika provides a stable raw meat color at a relatively neutral pH. Further it has been found that this particular combination of colors also shifts to brown during baking, frying or grilling, in a comparable manner to an animal-based meat product.

Although the present technology has been described with reference to a number of embodiments and examples, these embodiments and examples may be combined by the person skilled in the art within the scope or the spirit of the invention. The overall scope of the invention is defined by the appended claims.

### EXAMPLES

### 1. Pigment shade comparison in two common plant-based protein bases

Experiments were carried out in various bases using different vegetable protein sources, specifically, pea protein and soy/wheat gluten. Each base was made according to their respective recipes with the final test product being hamburger-like patties; the final pH of the bases ranged from 5.2-6.2.

The following pigments were tested in each base and analyzed for aroma and flavor: sweet potato, red beet, red radish and black carrot.

Dosage color rates are as follows:
- Sweet potato: 0.56% to 2.25%;
- Beet 0.307% to 1.228%;
- Red Radish 0.291% to 2.323%;
- Black Carrot 0.0875%- 0.300%.

Color, aroma and flavor were noted during sample preparation, cooking and reheating.

A comparison with cooked/uncooked ground beef was also carried out.

Colormetric values are given in the following Tables.

Tables A and B: Comparison of shade and colorimetric values in uncooked (Table A) and cooked (Table B) plant protein bases colored with sweet potato, red radish and black carrot, compared to cooked and uncooked beef.

**Table A: Uncooked ground beef compared to uncooked plant based patty colored with colors derived from plant based sources.**

| Batch Name | L* range | a* range | b* range | Chroma range | hue range |
|---|---|---|---|---|---|
| Beef, uncooked | **51.80+/-5.00** | **16.90+/-3.00** | **15.10+/-3.00** | **22.70+/-4.50** | **41.90+/-5.50** |
| Red Sweet Potato, Uncooked | 59.90+/-5.00 | 13.60+/-6.00 | 8.70+/-2.00 | 16.30+/-5.00 | 33.80+/- 10.00 |
| Radish, uncooked | 62.50+/-4.00 | 13.00+/-4.00 | 10.10+/-2.00 | 16.50+/-4.00 | 38.30+/-4.00 |
| Black carrot, uncooked | 62.90+/-2.00 | 0.08+/-5.00 | 9.50+/-1.50 | 10.00+/-2.00 | 90.60+/- 25.00 |

**Table B: Cooked ground beef compared to uncooked plant based patty colored with colors derived from plant based sources.**

| Batch Name | L* range | a* range | b* range | Chroma range | hue range |
|---|---|---|---|---|---|
| Beef, cooked | **43.40+/-5.50** | **4.80+/-2.00** | **6.15+/-1.50** | **7.80+/-1.50** | **51.80+/-4.00** |
| Red Sweet Potato, cooked | 53.60+/-5.00 | 13.70+/-5.0 | 14.5+/-6.5 | 20.10+/-6.50 | 46.5+/-13.00 |
| Radish, cooked | 57.40+/-7.50 | 12.90+/-5.50 | 15.70+/-7.50 | 20.40+/-9.50 | 50.40+/-7.00 |
| Black carrot, cooked | 56.40+/-7.00 | 3.10+/-3.50 | 14.5+/-7.50 | 15.1+/-7.00 | 68.4+/-27.00 |

Averages were taken of each colorimetric values (L*a*b*) for the ground beef retail options differing in %fat content as well as for the pH range of each pigment. A colorimetric range was then established for each pigment to determine which was closest to ground beef. Data above shows that both RSP and radish are similar, however, the bitter off-notes mentioned in sensory testing would indicate that RSP would be the preferred pigment.

Secondary colorants such as annatto and black carrot will contribute to a shade more similar to ground beef.

Tables C and D: Comparison of shade and colorimetric values in uncooked (Table C) and cooked (Table D) plant protein bases colored with sweet potato, red radish and black carrot, compared to cooked and uncooked beef.

**Table C: Uncooked ground beef (97% Lean) compared to uncooked plant based patty (Wheat/Soy or Pea) colored with colors derived from plant based sources.**

| Pigment, Uncooked | Plant Protein Uncooked Base | L* | a* | b* | Chroma | hue | DE2000 |
|---|---|---|---|---|---|---|---|
| Beef Myoglobin, Uncooked | - | 47.90 | 19.90 | 14.86 | 24.84 | 36.75 | 0.00 |
| | | | | | | | |
| Sweet Potato | Wheat / Soy | 52.90 | 12.08 | 6.09 | 13.53 | 26.75 | 8.49 |
| Sweet Potato | Pea | 50.69 | 9.71 | 4.37 | 10.65 | 24.23 | 9.35 |
| | | | | | | | |
| Radish | Wheat / Soy | 55.97 | 10.06 | 6.33 | 11.89 | 32.18 | 11.17 |
| Radish | Pea | 52.69 | 9.73 | 5.08 | 10.98 | 27.57 | 9.81 |
| | | | | | | | |
| Black Carrot | Wheat / Soy | 48.71 | 2.13 | 0.84 | 2.29 | 21.52 | 16.30 |
| Black Carrot | Pea | 44.60 | -1.67 | -2.35 | 2.88 | 234.60 | 24.18 |

**Table D Cooked ground beef (97% Lean) compared to cooked plant based patty (Wheat/Soy or Pea) colored with colors derived from plant based sources.**

| Pigment, Cooked | Plant Protein Cooked Base | L* | a* | b* | Chroma | hue | DE2000 |
|---|---|---|---|---|---|---|---|
| Beef Myoglobin, Cooked | - | 53.28 | 8.65 | 14.00 | 16.46 | 58.29 | 0.00 |
| | | | | | | | |
| Sweet Potato | Wheat / Soy | 60.84 | 8.51 | 7.97 | 11.66 | 43.12 | 8.23 |
| Sweet Potato | Pea | 52.77 | 8.60 | 5.58 | 10.25 | 32.98 | 6.40 |
| | | | | | | | |
| Radish | Wheat / Soy | 60.60 | 9.21 | 6.65 | 11.36 | 35.83 | 8.85 |
| Radish | Pea | 54.11 | 9.23 | 6.32 | 11.19 | 34.40 | 6.08 |
| | | | | | | | |
| Black Carrot | Wheat / Soy | 53.53 | 1.7 | 0.72 | 1.85 | 22.95 | 11.53 |
| Black Carrot | Pea | 46.50 | -2.13 | -2.33 | 3.16 | 227.57 | 18.49 |

Tables C & D demonstrate the similar performance of these pigments using bases with two differing plant protein sources. This supports that the performance of these natural pigments have broad functionality when applied in this food category. From Tables C and D, it can be seen that:
- Sweet Potato and Red Radish are relatively similar in regards to the DE values and are closest in hue (DH = Delta Hue) to that of ground beef; especially ground beef in the raw state (DE < 2 is considered not discernible to the untrained eye).
- Black Carrot has relatively large DE values and a larger DH as compared to the other natural pigments at equivalent color unit strength when compared to ground beef.

### Discussion

The Red Sweet Potato allows for plant-based meats to appear redder in a neutral pH when uncooked, giving the appearance of raw meat.

### Pea Base:

The closest color (in relation to DE) to the red sweet potato was red radish (Table C & D). This was seen in both the uncooked and cooked samples. However, at a medium dosage level, red radish off-notes were noticed in the pea-protein based samples, mostly in bitterness and bitter aftertaste. It was determined that this would be increased in the high dosage as well. No strong off-aromas were noted.

### Soy/Wheat Base:

Similar results were seen in this base in relation to the red radish flavor off-notes. Overall, the radish was more blue/purple (at medium and high dosages).

### Soy Base:

At the medium dosage, the radish and sweet potato were comparable in color, but at a high dosage (cooked) the radish is more purple. Bitter off-notes in radish were noted at both levels.

Overall, sweet potato provides a red shade that is less blue and has no noticeable off-aromas or bitter notes independent of the base.

### 2. Comparison between Red Sweet Potato at two different color unit (CU) concentrations

Plant-based burgers (based on Soy and Pea bases) were prepared with two colorant compositions:
High Strength (HS) = Red Sweet Potato
Low Strength RSP (LS) = Red Sweet Potato only

Color Unit (CU) is defined as "color strength expressed as absorption capacity per weight unit of color". Colorimetry measurements were taken on the cooked and uncooked burgers. The results are shown in Tables E and F.

**Table E: High Strength (Red Sweet Potato, 40CU) in plant based burgers vs. Low Strength RSP (Red Sweet Potato, 8CU) - soy base**

| Pigment, Uncooked | Plant Protein Uncooked Base | L* | a* | b* | Chroma | hue | DE 2000 |
|---|---|---|---|---|---|---|---|
| Low Strength SWP | Soy | 56.3 | 8.87 | 8.46 | 12.26 | 43.66 | 0.00 |
| High Strength SWP | Soy | 53.88 | 9.52 | 7.97 | 12.42 | 39.95 | 2.43 |

| Pigment, Cooked | Plant Protein Cooked Base | L* | a* | b* | Chroma | hue | DE 2000 |
|---|---|---|---|---|---|---|---|
| Low Strength SWP | Soy | 50.65 | 10.36 | 12.4 | 16.16 | 50.13 | 0.00 |
| High Strength SWP | Soy | 53.13 | 9.74 | 12.11 | 15.54 | 51.2 | 2.51 |

**Table F: Use of HS (Red Sweet Potato, 40CU) in plant based burgers vs. Low Strength (Red Sweet Potato, 8CU) - pea base**

| Pigment, Uncooked | Plant Protein Uncooked Base | L* | a* | b* | Chroma | hue | DE 2000 |
|---|---|---|---|---|---|---|---|
| Low Strength SWP | Pea | 52.29 | 11.42 | 4.1 | 12.14 | 19.76 | 0.00 |
| High Strength SWP | Pea | 52.6 | 11.71 | 3.27 | 12.16 | 15.59 | 0.78 |

| Pigment, Cooked | Plant Protein Cooked Base | L* | a* | b* | Chroma | hue | DE 2000 |
|---|---|---|---|---|---|---|---|
| Low Strength SWP | Pea | 49.62 | 9.19 | 6.89 | 11.49 | 36.84 | 0.00 |
| High Strength SWP | Pea | 49.12 | 9.86 | 6.15 | 11.62 | 31.97 | 1.08 |

The pH was also measured to demonstrate that the HS Red Sweet Potato resulted in minor changes to pH when compared to LS Red Sweet Potato in a soy and pea protein base, even at higher concentrations. Results are below:

**Soy**

| **Pigment** | **pH** |
|---|---|
| No Color | 7.2 |
| LS Red Sweet Potato | 6.57 |
| HS Red Sweet Potato | 6.66 |

**Pea**

| **Pigment** | **pH** |
|---|---|
| No color | 7.1 |
| LS Red Sweet Potato | 6.63 |
| HS Red Sweet Potato | 6.71 |

It is thus shown that the more concentrated RSP, while used a lower dosage, does not affect the pH and exibits a shade very similar to the low strength RSP.

These results show that the use of high strength Red Sweet Potato (HS) in plant based burgers is feasible, and gives good color reproduction in raw and cooked states. This will potentially have a reduced color dosage without compromising the shade.

### Impact of pH on plant-sourced pigments in whole milk

Method: Four anthocyanins were tested in pH adjusted whole milk (pH 4-7). Each anthocyanin pigment or blend was added to whole milk at a specified dosage rate so as to maintain a comparable color unit (CU) pigment strength as noted in Tables E-H. The samples were adjusted to pH's of 4, 5, 6, and 7 using citric acid and trisodium citrate. Once the desired pH was obtained, each sample was measured on the DataColor spectrophotometer for L*, a*, b*, Chroma, hue and DE2000 values.

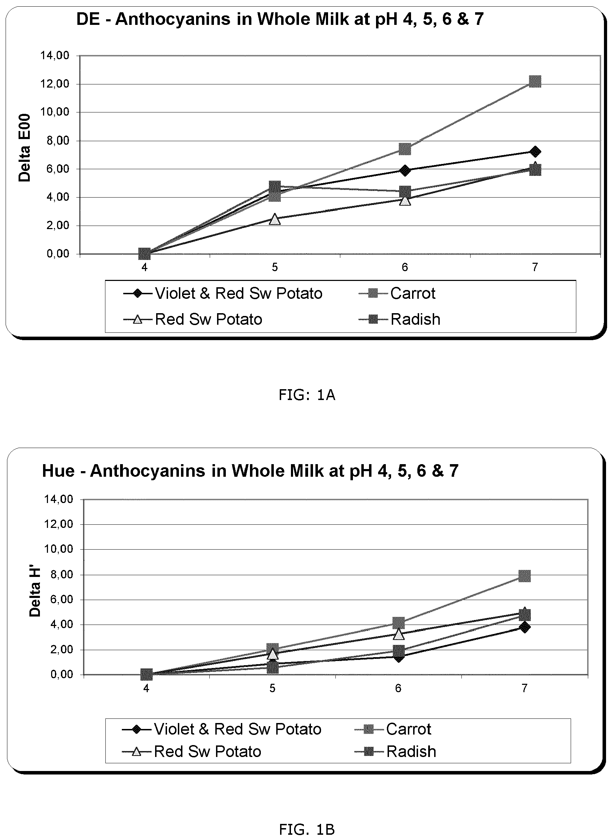

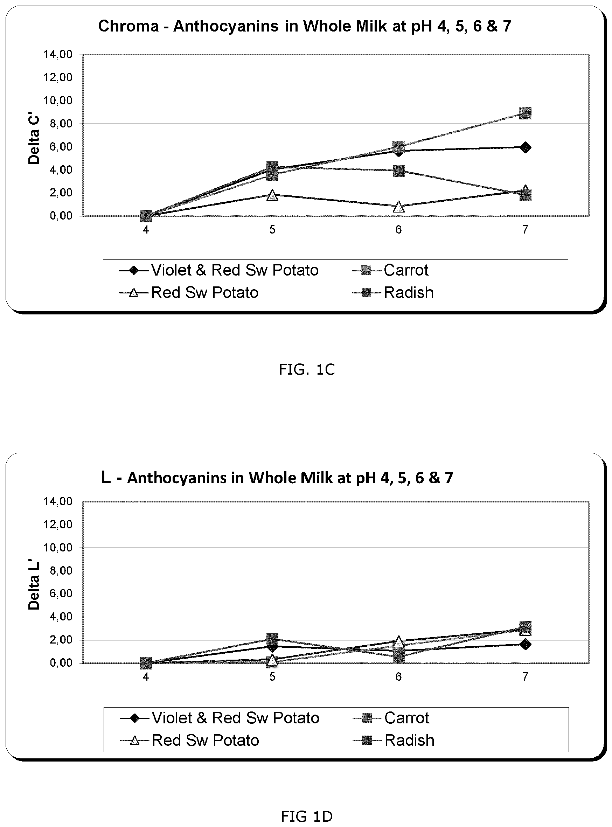

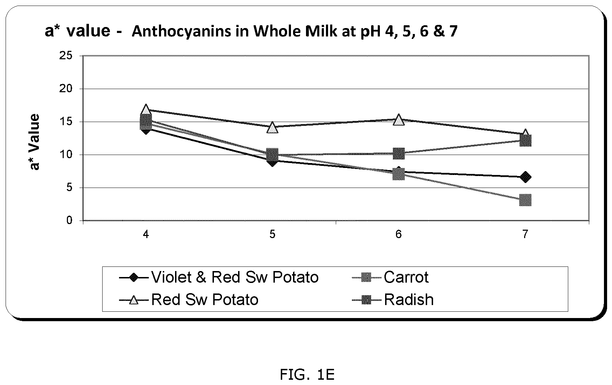

Results: The results of this test illustrate that the red sweet potato had a redder hue (illustrated by a more positive a* value) across this pH range and especially at the upper pH levels (neutral pH range 6-7). See Tables G-J and Figures 1A-1E:

**G. Violet Sweet Potato & Red Sweet Potato 8 CU (0.1125% dosage) DataColor Values in Whole Milk**

| Batch Name | pH | L* | a* | b* | Chroma | hue | DE |
|---|---|---|---|---|---|---|---|
| Violet & Red Sweet Potato | 4 | 80.02 | 13.98 | -0.22 | 13.99 | 359.11 | 0.00 |
| Violet & Red Sweet Potato | 5 | 82.13 | 9.11 | -1.08 | 9.18 | 353.23 | 4.36 |
| Violet & Red Sweet Potato | 6 | 81.57 | 7.37 | -1.48 | 7.52 | 348.66 | 5.91 |
| Violet & Red Sweet Potato | 7 | 77.66 | 6.64 | -3.64 | 7.58 | 331.26 | 7.27 |

**H. Red Sweet Potato 8 CU (0.1125% dosage) DataColor Values in Whole Milk**

| Batch Name | pH | L* | a* | b* | Chroma | hue | DE |
|---|---|---|---|---|---|---|---|
| Red Sweet Potato | 4 | 80.41 | 16.83 | 0.73 | 16.85 | 2.48 | 0.00 |
| Red Sweet Potato | 5 | 80.89 | 14.21 | -1.59 | 14.30 | 353.60 | 2.50 |
| Red Sweet Potato | 6 | 77.71 | 15.37 | -3.90 | 15.85 | 345.76 | 3.85 |
| Red Sweet Potato | 7 | 76.27 | 13.08 | -5.84 | 14.32 | 335.93 | 6.15 |

**I. Black Carrot 9 CU - (0.1% dosage) DataColor Values in Whole Milk**

| Batch Name | pH | L* | a* | b* | Chroma | hue | DE |
|---|---|---|---|---|---|---|---|
| Black Carrot | 4 | 77.68 | 14.75 | -0.51 | 14.76 | 358.03 | 0.00 |
| Black Carrot | 5 | 77.55 | 10.12 | -2.68 | 10.46 | 345.17 | 4.11 |
| Black Carrot | 6 | 75.59 | 7.07 | -4.17 | 8.21 | 329.47 | 7.43 |
| Black Carrot | 7 | 73.69 | 3.11 | -5.35 | 6.19 | 300.12 | 12.21 |

**J. Red Radish 15.5 CU- (0.06% dosage) DataColor Values in Whole Milk**

| Batch Name | pH | L* | a* | b* | Chroma | hue | DE |
|---|---|---|---|---|---|---|---|
| Red Radish | 4 | 80.20 | 15.32 | -0.01 | 15.32 | 359.97 | 0.00 |
| Red Radish | 5 | 83.27 | 9.96 | -0.61 | 9.98 | 356.48 | 4.77 |
| Red Radish | 6 | 80.98 | 10.23 | -2.18 | 10.46 | 347.98 | 4.40 |
| Red Radish | 7 | 75.74 | 12.15 | -6.13 | 13.61 | 333.21 | 5.97 |

These results support the benefits of the anthocyanin pelargonidin found in red sweet potato. Red Sweet Potato had the highest "a" values so it maintained a redder hue at each pH tested.

The measurements recorded in Tables G-J are illustrated in Figures 1A-1E. The higher the a* value, the redder the color appears. The a* values for the red sweet potato in milk are higher at each pH level tested. The overall change in visual color noted as the Delta E 2000 (DE) is lower than the violet/red sweet potato blend and black carrot indicating less change in the visual shade over this pH range in milk.

The higher the a* value, the more red the shade (cf. Appendix) Red Sweet Potato maintained high a* values and a redder hue at each pH tested only rivaled by radish. All anthocyanins became less red as the pH increased; with black carrot changing the most and becoming the least red in shade (lowest a* value).

Please refer to the Appendix for definitions of these colorimetric values (L, a, b, Chroma, hue, DE. DH, DC & DL)

### 3. Baking/boiling stability

Evaluation of the shade and stability of beet, black carrot, red sweet potato and radish in a pea protein meat analogue were completed.

Samples of pea protein meat analogue base were subjected to two cooking methods (baking, boiling) and various pH levels (5-7). Colorimetric data comparisons were made at each condition (eg baking, boiling) at a single pH, or by condition at various pH's.

Beet, Black Carrot, Red Sweet Potato, Radish were compared.

This first series of experiments (Tables K-N) evaluated the comparative colorimetric data of the pigment at fixed pH.

**K. Beet, 0.7% Betanin (0.307% Dosage) DataColor Values in Baked & Boil Pea Protein Analogue**

| Batch Name | pH | L* | a* | b* | Chroma | hue | DE |
|---|---|---|---|---|---|---|---|
| Beet, uncooked | 5 | 60.42 | 24.49 | 7.19 | 25.52 | 16.35 | 0.00 |
| Beet, baked | 5 | 60.60 | 13.45 | 28.60 | 31.61 | 60.60 | 18.33 |
| Beet, boiled | 5 | 58.80 | 23.00 | 14.48 | 27.18 | 32.20 | 5.49 |
| | | | | | | | |
| Beet, uncooked | 6 | 62.67 | 19.82 | 10.03 | 22.21 | 26.83 | 0.00 |
| Beet, baked | 6 | 54.61 | 14.95 | 34.20 | 37.33 | 54.61 | 18.01 |
| Beet, boiled | 6 | 60.18 | 15.59 | 20.26 | 25.56 | 52.43 | 8.96 |
| | | | | | | | |
| Beet, uncooked | 7 | 60.31 | 19.88 | 11.72 | 23.08 | 30.53 | 0.00 |
| Beet, baked | 7 | 55.18 | 13.13 | 33.50 | 35.98 | 55.18 | 16.51 |
| Beet, boiled | 7 | 60.81 | 14.27 | 19.45 | 24.12 | 53.74 | 7.94 |

**L. Black Carrot, 9 CU (0.0875% dosage) DataColor Values in Baked & Boil Pea Protein Analogue**

| Batch Name | pH | L* | a* | b* | Chroma | hue | DE |
|---|---|---|---|---|---|---|---|
| Bl. Carrot, uncooked | 5 | 63.85 | 4.53 | 9.52 | 10.54 | 64.52 | 0.00 |
| Bl. Carrot, baked | 5 | 55.72 | 6.22 | 13.17 | 14.57 | 55.72 | 7.67 |
| Bl. Carrot, boiled | 5 | 62.03 | 4.68 | 11.29 | 12.22 | 67.49 | 1.98 |
| | | | | | | | |
| Bl. Carrot, uncooked | 6 | 63.37 | -1.40 | 10.79 | 10.88 | 97.40 | 0.00 |
| Bl. Carrot, baked | 6 | 49.30 | 6.11 | 21.82 | 22.66 | 49.30 | 16.61 |
| Bl. Carrot, boiled | 6 | 61.14 | -0.27 | 12.49 | 12.49 | 91.25 | 2.70 |
| | | | | | | | |
| | | | | | | | |
| Bl. Carrot, uncooked | 7 | 61.56 | -2.89 | 8.06 | 8.56 | 109.72 | 0.00 |
| Bl. Carrot, baked | 7 | 51.32 | 2.79 | 17.66 | 17.88 | 51.32 | 13.47 |
| Bl. Carrot, boiled | 7 | 59.05 | -1.06 | 10.84 | 10.89 | 95.61 | 3.95 |

**M. Red SWP, 8 CU (0.563% dosage) DataColor Values in Baked & Boil Pea Protein Analogue**

| Batch Name | pH | L* | a* | b* | Chroma | hue | DE |
|---|---|---|---|---|---|---|---|
| Red SWP, uncooked | 5 | 61.87 | 18.97 | 8.82 | 20.92 | 24.92 | 0.00 |
| Red SWP, baked | 5 | 51.50 | 17.93 | 16.92 | 24.65 | 51.50 | 11.28 |
| Red SWP, boiled | 5 | 57.66 | 18.73 | 12.49 | 22.52 | 33.70 | 4.56 |
| | | | | | | | |
| Red SWP, uncooked | 6 | 60.75 | 11.84 | 9.6 | 15.24 | 39.03 | 0.00 |
| Red SWP, baked | 6 | 49.02 | 14.14 | 19.72 | 24.27 | 49.02 | 12.84 |
| Red SWP, boiled | 6 | 58.66 | 10.85 | 11.97 | 16.16 | 47.83 | 2.91 |
| | | | | | | | |
| Red SWP, uncooked | 7 | 57.06 | 10.12 | 7.79 | 12.77 | 37.57 | 0.00 |
| Red SWP, baked | 7 | 48.83 | 11.68 | 15.49 | 19.4 | 48.83 | 9.60 |
| Red SWP, boiled | 7 | 55.81 | 9.04 | 10.14 | 13.59 | 48.27 | 2.63 |

**N. Radish, 15.5 CU (0.291% dosage) DataColor Values in Baked & Boil Pea Protein Analogue**

| Hatch Name | pH | L* | a* | b* | Chroma | hue | DE |
|---|---|---|---|---|---|---|---|
| Radish, uncooked | 5 | 65.67 | 16.01 | 11.44 | 19.68 | 35.55 | 0.00 |
| Radish, baked | 5 | 53.60 | 18.37 | 23.33 | 29.70 | 53.60 | 12.88 |
| Radish, boiled | 5 | 63.37 | 14.51 | 13.75 | 19.99 | 43.45 | 3.03 |
| | | | | | | | |
| Radish, uncooked | 6 | 61.70 | 12.82 | 9.87 | 16.18 | 37.60 | 0.00 |
| Radish, baked | 6 | 53.74 | 13.54 | 17.62 | 22.23 | 53.74 | 8.93 |
| Radish, boiled | 6 | 60.11 | 11.09 | 12.13 | 16.43 | 47.55 | 2.98 |
| | | | | | | | |
| Radish, uncooked | 7 | 60.25 | 10.19 | 9.09 | 13.65 | 41.74 | 0.00 |
| Radish, baked | 7 | 50.78 | 12.09 | 17.35 | 21.15 | 50.78 | 10.40 |
| Radish, boiled | 7 | 62.60 | 7.66 | 10.24 | 12.78 | 53.21 | 3.58 |

It was found that red sweet potato shifted browner when subjected to the direct heat of baking, in a similar manner to beet. However, beet demonstrated considerable color loss when baked.

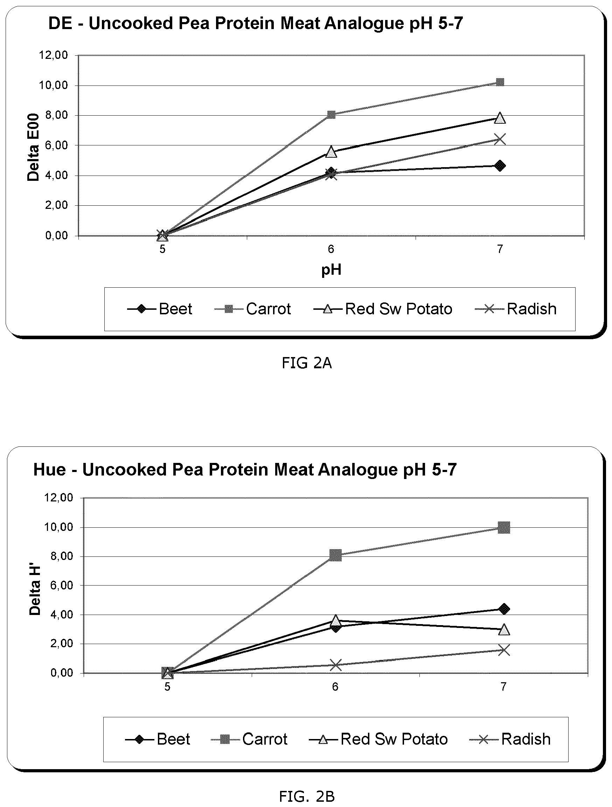

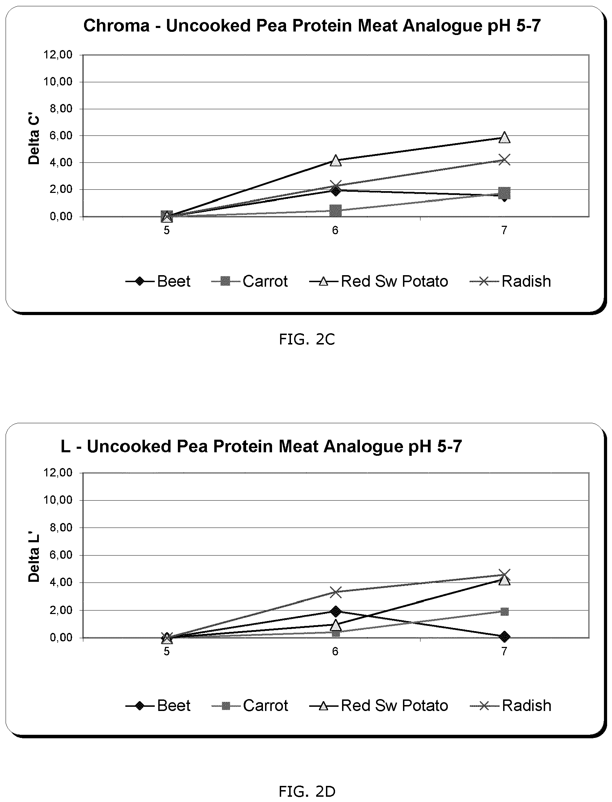

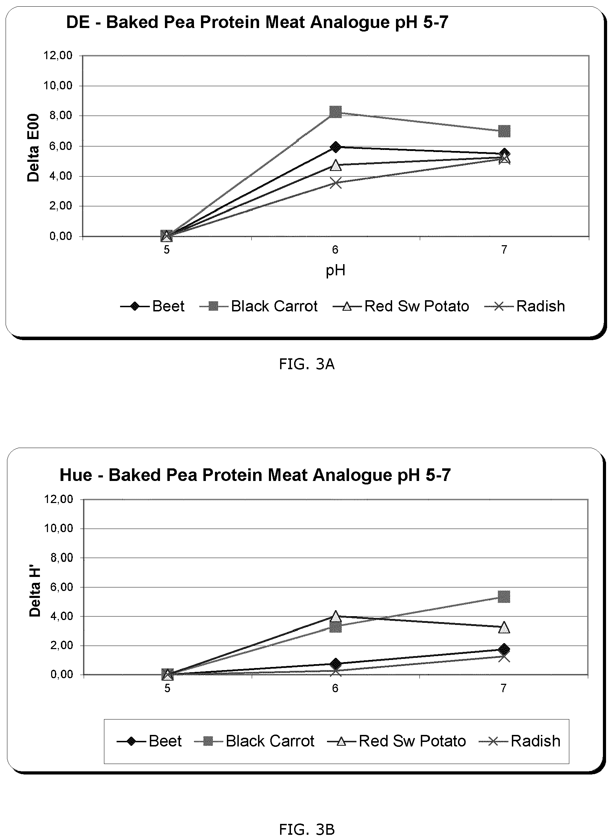

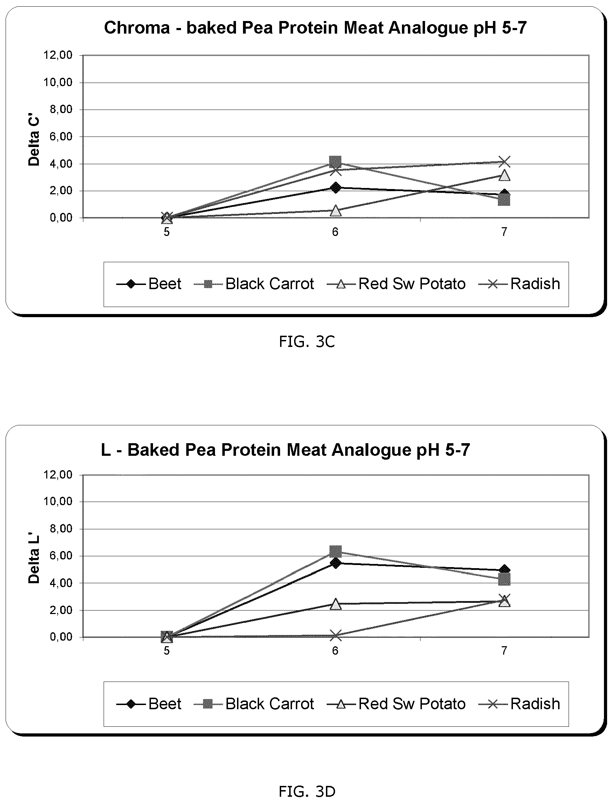

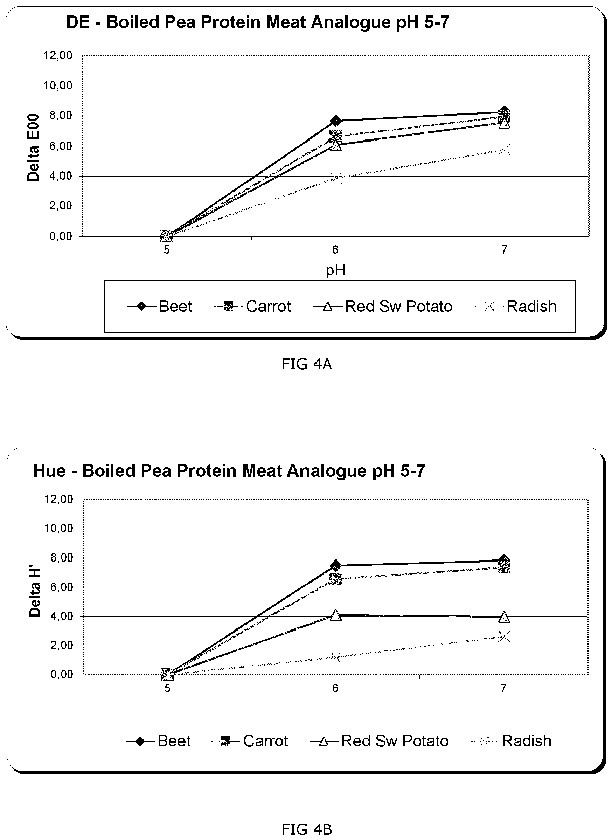

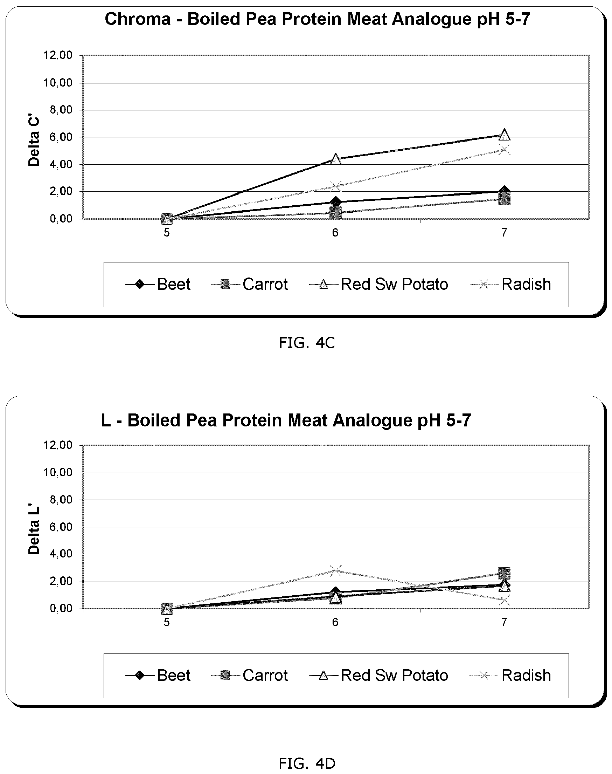

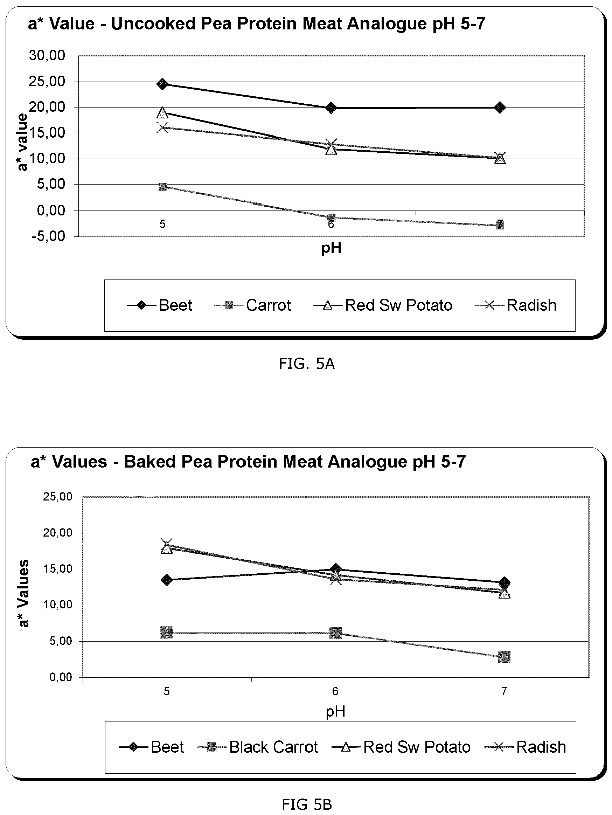

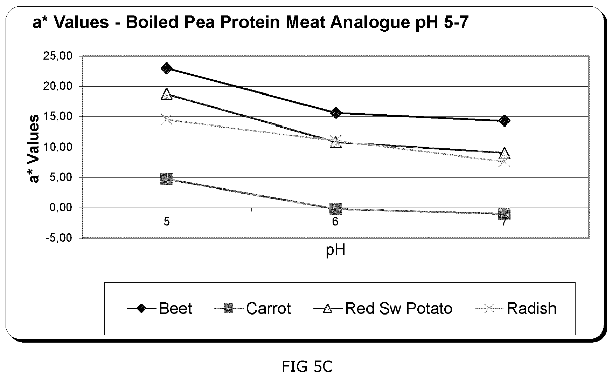

Data comparisons were also made at various pH's for each pigment under a specific condition (e.g. baking, boiling). See Tables O-R and Figures 2-5.

**O. Beet - B-70 (0.307%) DataColor Values in Baked & Boil Pea Protein Analogue**

| Batch Name | pH | L* | a* | b* | Chroma | hue | DE |
|---|---|---|---|---|---|---|---|
| Beet, uncooked | 5 | 60.42 | 24.49 | 7.19 | 25.52 | 16.35 | 0.00 |
| Beet, uncooked | 6 | 62.67 | 19.82 | 10.03 | 22.21 | 26.83 | 4.17 |
| Beet, uncooked | 7 | 60.31 | 19.88 | 11.72 | 23.08 | 30.53 | 4.65 |
| | | | | | | | |
| Beet, baked | 5 | 60.60 | 13.45 | 28.60 | 31.61 | 60.60 | 0.00 |
| Beet, baked | 6 | 54.61 | 14.95 | 34.20 | 37.33 | 54.61 | 5.94 |
| Beet, baked | 7 | 55.18 | 13.13 | 33.50 | 35.98 | 55.18 | 5.49 |
| | | | | | | | |
| Beet, boiled | 5 | 58.80 | 23.00 | 14.48 | 27.18 | 32.20 | 0.00 |
| Beet, boiled | 6 | 60.18 | 15.59 | 20.26 | 25.56 | 52.43 | 7.65 |
| Beet, boiled | 7 | 60.81 | 14.27 | 19.45 | 24.12 | 53.74 | 8.25 |

**P. Black Carrot - (0.0875%) DataColor Values in Baked & Boil Pea Protein Analogue**

| Batch Name | pH | L* | a* | b* | Chroma | hue | DE |
|---|---|---|---|---|---|---|---|
| Bl. Carrot, uncooked | 5 | 63.85 | 4.53 | 9.52 | 10.54 | 64.52 | 0.00 |
| Bl. Carrot, uncooked | 6 | 63.37 | -1.4 | 10.79 | 10.88 | 97.4 | 8.04 |
| Bl. Carrot, uncooked | 7 | 61.56 | -2.89 | 8.06 | 8.56 | 109.72 | 10.22 |
| | | | | | | | |
| Bl. Carrot, baked | 5 | 55.72 | 6.22 | 13.17 | 14.57 | 55.72 | 0.00 |
| Bl. Carrot, baked | 6 | 49.3 | 6.11 | 21.82 | 22.66 | 49.3 | 8.23 |
| Bl. Carrot, baked | 7 | 51.32 | 2.79 | 17.66 | 17.88 | 51.32 | 6.95 |
| | | | | | | | |
| Bl. Carrot, boiled | 5 | 62.03 | 4.68 | 11.29 | 12.22 | 67.49 | 0.00 |
| Bl. Carrot, boiled | 6 | 61.14 | -0.27 | 12.49 | 12.49 | 91.25 | 6.61 |
| Bl. Carrot, boiled | 7 | 59.05 | -1.06 | 10.84 | 10.89 | 95.61 | 7.93 |

**Q. Red SWP (0.563%) DataColor Values in Baked & Boil Pea Protein Analogue**

| Batch Name | pH | L* | a* | b* | Chroma | hue | DE |
|---|---|---|---|---|---|---|---|
| Red SWP, uncooked | 5 | 61.87 | 18.97 | 8.82 | 20.92 | 24.92 | 0.00 |
| Red SWP, uncooked | 6 | 60.75 | 11.84 | 9.6 | 15.24 | 39.03 | 5.59 |
| Red SWP, uncooked | 7 | 57.06 | 10.12 | 7.79 | 12.77 | 37.57 | 7.84 |
| | | | | | | | |
| Red SWP, baked | 5 | 51.5 | 17.93 | 16.92 | 24.65 | 51.5 | 0.00 |
| Red SWP, baked | 6 | 49.02 | 14.14 | 19.72 | 24.27 | 49.02 | 4.74 |
| Red SWP, baked | 7 | 48.83 | 11.68 | 15.49 | 19.4 | 48.83 | 5.27 |
| | | | | | | | |
| Red SWP, boiled | 5 | 57.66 | 18.73 | 12.49 | 22.52 | 33.70 | 0.00 |
| Red SWP, boiled | 6 | 58.66 | 10.85 | 11.97 | 16.16 | 47.83 | 6.07 |
| Red SWP, boiled | 7 | 55.81 | 9.04 | 10.14 | 13.59 | 48.27 | 7.53 |

**R. Radish (0.291%) DataColor Values in Baked & Boil Pea Protein Analogue**

| Batch Name | pH | L* | a* | b* | Chroma | hue | DE |
|---|---|---|---|---|---|---|---|
| Radish, uncooked | 5 | 65.67 | 16.01 | 11.44 | 19.68 | 35.55 | 0.00 |
| Radish, uncooked | 6 | 61.70 | 12.82 | 9.87 | 16.18 | 37.60 | 4.06 |
| Radish, uncooked | 7 | 60.25 | 10.19 | 9.09 | 13.65 | 41.74 | 6.41 |
| | | | | | | | |
| Radish, baked | 5 | 53.60 | 18.37 | 23.33 | 29.70 | 53.60 | 0.00 |
| Radish, baked | 6 | 53.74 | 13.54 | 17.62 | 22.23 | 53.74 | 3.55 |
| Radish, baked | 7 | 50.78 | 12.09 | 17.35 | 21.15 | 50.78 | 5.16 |
| | | | | | | | |
| Radish, boiled | 5 | 63.37 | 14.51 | 13.75 | 19.99 | 43.45 | 0.00 |
| Radish, boiled | 6 | 60.11 | 11.09 | 12.13 | 16.43 | 47.55 | 3.85 |
| Radish, boiled | 7 | 62.60 | 7.66 | 10.24 | 12.78 | 53.21 | 5.79 |

In a similar manner to beet, the red sweet potato shifted browner when subjected to the direct heat of baking. Please refer to the a*value graphs below to better quantify the changes in red hue as a function of the a*value.

The data from tables O-R are illustrated in Figures 2-5.

Changes in overall hue were greatest for black carrot as it shifted the most from a grey/blue and became dark blue/green in shade at pH 7.

In the pre-cooked meat analogue patty, beet was the most red.

In the baked pea protein meat patty, radish and red sweet potato were more red at pH 5 and similar at pH 6 & 7. Black carrot was much less red at all three pH levels. The beet shifted less red (browner) at all pH levels when subjected to the direct heat of baking which is typically desireable as this change in shade is typical of ground beef. Red sweet potato and radish provided a similar hue at pH 6 & 7 to beet. Red sweet potato and radish lost less red shade during baking than beet demonstrating their superior heat stability over beet.

Beet and the anthocyanins trended similarly when boiled. All became less red after boiling; especially at and above pH 6.

In the uncooked plant based meat analogue, the lowest change in hue (Delta H') was seen by radish, red sweet potato and then beet across pH 5, 6 & 7. The black carrot provides a much bluer color primarily in the pH 6-7 range.

In the baked product, the lowest change in hue (Delta H') in the uncooked plant based meat analogue was seen by radish, red sweet potato and then beet across pH 5, 6 & 7. The black carrot provides a much bluer color primarily in the pH 6-7 range.

In the boiled product, the lowest change in hue (Delta H') in the uncooked plant based meat analogue was seen by radish and red sweet potato across pH 5, 6 & 7. The beet and black carrot provides a greater change in hue primarily in the pH 6-7 range.

### 4. Value of combining pigments to produce beef-like pre- and post-cooked color

**S. Comparison of uncooked beef with individual and blends of anthocyanins**

| Sample Name | L* | a* | b* | Chroma | hue |
|---|---|---|---|---|---|
| Beef, uncooked | 51.8 | 16.9 | 15.1 | 22.7 | 41.9 |
| Red sweet potato/black carrot, uncooked* | 44.36 | 22.35 | 9.84 | 24.42 | 23.77 |
| Red Sweet Potato, uncooked | 60.75 | 11.84 | 9.6 | 15.24 | 39.03 |
| Radish, uncooked | 61.7 | 12.82 | 9.87 | 16.18 | 37.6 |
| Black carrot, uncooked | 63.37 | -1.4 | 10.79 | 10.88 | 97.4 |

| | | | | | |
|---|---|---|---|---|---|
| *Annatto was also combined with the anthocyanins | | | | | |

**T. Comparison of uncooked beef with individual and blends of anthocyanins**

| Sample Name | L* | a* | b* | Chroma | hue |
|---|---|---|---|---|---|
| Beef, cooked | 43.40 | 4.80 | 6.15 | 7.80 | 51.80 |
| Red sweet potato/black carrot, cooked* | 33.35 | 13.69 | 18.99 | 23.41 | 54.22 |
| Red Sweet Potato, cooked | 49.02 | 14.14 | 19.72 | 24.27 | 49.02 |
| Radish, cooked | 53.74 | 13.54 | 17.62 | 22.23 | 53.74 |
| Black carrot, cooked | 49.30 | 6.11 | 21.82 | 22.66 | 49.30 |

| | | | | | |
|---|---|---|---|---|---|
| *Annatto was also combined with the anthocyanins | | | | | |

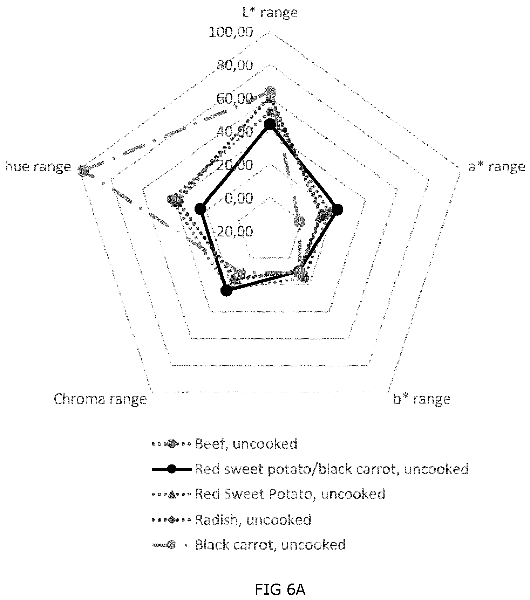

The data in Tables S and T is illustrated in spider graphs Figures 6A-B, respectively. These graphs show the individual uncooked and cooked red sweet potato, radish and black carrot anthocyanins used to color a plant based patty as compared to uncooked and cooked beef. When matching beef, the redness (a*range) is most desired in the uncooked product. However a browner product is desired in the cooked patty. In order to achieve this, secondary colors are often needed.

Black carrot, when used alone in the uncooked meat analogue, is quite different than other anthocyanins as noted by the low a*value and high hue value (Figure 6A). The combination of red sweet potato and black carrot shifts the shade to a higher a*value; therefore a more red shade. Additionally, the hue decreases significantly when black carrot is combined with red sweet potato and the meat analogue becomes a blue red similar to uncooked beef.

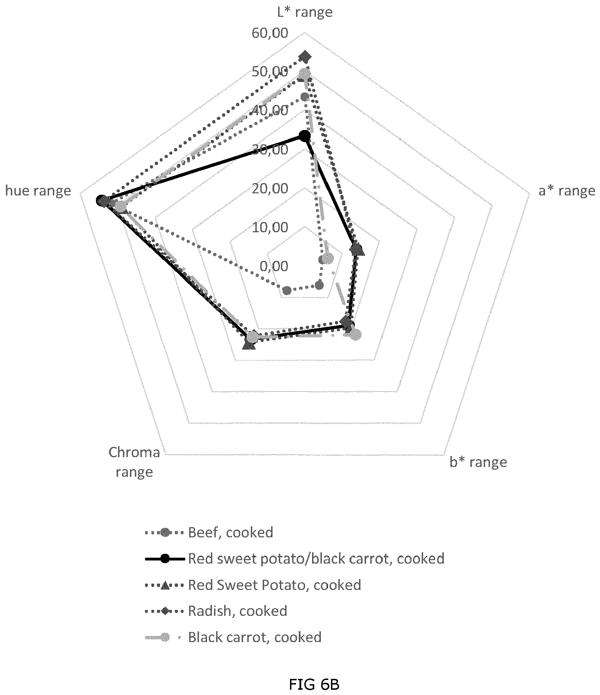

The colorimetric data graphed in Figure 6B demonstrates that the combination of black carrot and red sweet potato produced a darker/browner product (lower L*value) for the cooked plant based patty. While the red sweet potato, radish and black carrot pigments used individually to color the patty are similar to each other, the combination of the red sweet potato and black carrot created a darker end product that is desired by consumers. The addition of a third pigment, either paprika or annatto, can enhance the uncooked and cooked shade further.

### APPENDIX: Definitions of the spectrocolorimetric values

Spectrocolorimetrics values are presented in the following figures and are defined as:
- **DE*2000** is used as the main indicator to evaluate the total color change and the difference between colors. Thus, high values of DE 2000 indicate large variation color between the standard and test. Generally, it can be considered that when DE* < 1, the visual difference is not perceptible and when 1 < DE*2000 < 2, the color difference is acceptable.
- **L*** is the lightness or intensity that defines the color strength, from black (L=0) to white (L=100). The bigger the values of L* are, the lighter the color is.
- **C*** is the saturation or chroma and defines the sample color intensity as opposed to white. Hence, the more C* increases, the more colored or vivid/strong the sample seems. The more C* decreases, the more discolored or weak/grayish the color sample seems.
- **h*** is the hue. It describes the visual sensation that could be associated to colors like red, orange, yellow, etc. Thus, when the h* value is near 0, the tonality will be quite red and as this value increases from 0 to 90, the tonality will be close to yellow.
- The red/green axis is designated by **a*,** with positive values indicating a red hue and negative values a green hue
- The yellow/blue axis is designated by **b*,** with positive values indicating a yellow hue and negative values a blue hue
- **Delta H** is the absolute color difference between two samples known as the hue difference.
- **Delta C** is the absolute chroma difference between two samples known as the chroma difference.
- **Delta L** is the absolute lightness difference between two samples.

## Claims

1. A plant-based meat alternative comprising a colorant composition, said colorant composition comprising an anthocyanin colorant derived from red sweet potato.

2. The plant-based meat alternative according to claim 1, wherein said anthocyanin colorant comprises pelargonidin-based anthocyanins, preferably 50-90 mol% of one or more pelargonidin-based anthocyanins.

3. The plant-based meat alternative according to any one of the preceding claims, wherein said colorant composition further comprises at least one second colorant derived from black carrot, annatto or paprika, preferably black carrot.

4. The plant-based meat alternative according to any one of the preceding claims, wherein the pelargonidin-based anthocyanin is a monoglycoside or polyglycoside of pelargonidin with the chemical structure: 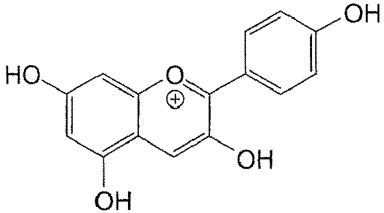 in which one or more alcohol (-OH) groups are glycosylated with a sugar residue selected from glucose, galactose, arabinose, rhamnose and xylose, or di- or tri-saccharides thereof.

5. The plant-based meat alternative according to claim 4, wherein at least one sugar residue of the pelargonidin-based anthocyanin is acylated with at least one carboxylic acid residue.

6. The plant-based meat alternative according to claim 5, at least 80 mol-% of all pelargonidin-based anthocyanins are acylated.

7. The plant-based meat alternative according to any one of the preceding claims, wherein the colorant composition comprises the anthocyanin colorant in an amount of 10-60%, preferably 20-50% by weight of said colorant composition.

8. The plant-based meat alternative according to any one of claims 3-7, wherein the colorant composition comprises the second colorant in an amount of 0.01 - 1% by weight, preferably in an amount of 0.02 - 0.8% by weight of the colorant composition.

9. The plant-based meat alternative according to any one of the preceding claims, comprising 10-40 weight % vegetable protein, preferably a legume protein, such as e.g. pea protein or soy protein.

10. The plant-based meat alternative according to any one of the preceding claims, wherein said plant-based meat alternative is to be cooked before being eaten.

11. The plant-based meat alternative according to any one of the preceding claims, being selected from the group consisting of a plant-based burger patty, a plant-based sausage, plant-based minced beef alternative, plant-based ham alternative, plant-based bacon alternative, plant-based lamb meat alternative and plant-based seafood alternative.

12. The plant-based meat alternative according to any one of the preceding claims, comprising said colorant composition in an amount of 0.1 - 10%, preferably 0.5 - 5% by weight of the plant-based meat alternative.

13. The plant-based meat alternative according to any one of the preceding claims, wherein the range of a* (as defined herein) for the uncooked plant-based meat alternative is between 6 and 30, preferably between 7 and 25, more preferably between 7 and 20.

14. The plant-based meat alternative according to any one of the preceding claims, wherein the hue range (as defined herein) for the uncooked plant-based meat alternative is thus between 20 and 60, preferably between 22 and 50.

15. The plant-based meat alternative according to any one of the preceding claims, wherein the range of a* (as defined herein) for the cooked plant-based meat alternative is thus between 3 and 20, preferably between 5 and 25, more preferably between 5 and 15.
